# EUROPÄISCHE PATENTANMELDUNG

(11) **EP 3 835 051 A1**
(43) Veröffentlichungstag der Anmeldung: **16.06.2021**
(21) Anmeldenummer: 20212095.2
(22) Anmeldetag: 07.12.2020
(51) Int. Cl.: B32B 1/08, B29D 23/00, B32B 5/02, B32B 7/022, B32B 27/12, B32B 27/32, C08L 23/00, F16L 11/00

(54) **SCHLAUCHLEITUNG**

(30) Priorität: 09.12.2019 DE 202019106835 U
(71) Anmelder: REHAU AG + Co, 95111 Rehau (DE)
(72) Erfinder: Denzner, Michael, 95444 Bayreuth (DE); Ruckdäschel, Gerhard, 95163 Weißenstadt (DE); Schörner, Georg, 95111 Rehau (DE); Wazlawik, Klaus, 95030 Hof (DE)

(57) **Zusammenfassung**

Die Erfindung betrifft eine Schlauchleitung, insbesondere für Hochdruck-Reinigungsgeräte, zum Transport eines Fluides (F) mit einer eine Mischung aus zwei polymeren Komponenten A und B enthaltenden Tragschicht (1), welche vorzugsweise die innerste Schlauchschicht bildet und einer die Tragschicht (1) umgebenden Armierungsschicht (2). Erfindungsgemäß ist die Komponente A ein thermoplastisches Polymer auf Olefin-Basis und die Komponente B ein thermoplastisches Elastomer oder ein Olefin-Block-Copolymer und die Komponenten A und B sowie das Mischungsverhältnis dieser Komponenten A und B sind derart gewählt, dass die Härte Shore A der Tragschicht (1) mehr als 85 beträgt.

## Beschreibung

Die Erfindung betrifft eine Schlauchleitung, insbesondere für Hochdruck-Reinigungsgeräte, zum Transport eines Fluides mit einer eine Mischung aus zwei polymeren Komponenten A und B enthaltenden Tragschicht, welche vorzugsweise die innerste Schlauchschicht bildet und einer die Tragschicht umgebenden Armierungsschicht.

Im Stand der Technik ist es bekannt, derartige Schlauchleitungen, welche in der Regel Drücken von 100 bar Ü und mehr ausgesetzt sind, mit Tragschichten aus Polyethylen zu versehen. Die Armierung besteht z.B. aus Polyester- oder Polyamid-Fäden bzw. Filamenten und als Ummantelung wird zweckmäßigerweise eine PVC-Schicht vorgesehen. Nachteilig ist hierbei, dass derartige Ausführungsformen relativ biegesteif knickanfällig sind, insbesondere bei niedrigen Temperaturen von beispielsweise 10 °C und weniger. Dies erschwert z.B. die Handhabung von Hochdruck-Reinigungsgeräten bei entsprechenden Außentemperaturen.

Bekannt sind auch Schlauchleitungen aus elastomeren Schichten. Diese sind jedoch vergleichsweise teuer. Die Verwendung von weich gemachten PVC-Schichten weiß den Nachteil auf, dass PVC-Materialien und insbesondere die hierbei erforderlichen Weichmacher aus ökologischen Gründen zunehmend abgelehnt werden.

Vor diesem Hintergrund liegt der Erfindung die Aufgabe zugrunde, eine Schlauchleitung mit den eingangs beschriebenen Merkmalen anzugeben, welche eine hohe Flexibilität und Knicksteifigkeit aufweist, kostengünstig herstellbar ist und dabei gleichzeitig den gestiegenen ökologischen Anforderungen Rechnung trägt.

Erfindungsgemäß wird diese Aufgabe dadurch gelöst, dass die Komponente A ein thermoplastisches Polymer auf Olefin-Basis und die Komponente B ein thermoplastisches Elastomer oder ein Olefin-Block-Copolymer ist und die Komponenten A und B sowie das Mischungsverhältnis dieser Komponenten A und B derart gewählt ist, dass die Härte Shore A der Tragschicht mehr als 85 beträgt. Vorzugsweise beträgt die Härte Shore A der Tragschicht 1 höchstens 90. Durch die erfindungsgemäße Kombination des thermoplastischen Polymers A auf Olefin-Basis mit einem thermoplastischen Elastomer bzw. einem Olefin-Block-Copolymer kann gegenüber reinem PE die Flexibilität und Knicksteifigkeit erheblich verbessert werden, ohne dass hierdurch die Kosten für das Material der Tragschicht insgesamt zu stark ansteigen. Ferner lässt sich durch diese Materialkombination der Einsatz von weich gemachtem PVC vermeiden.

Zweckmäßigerweise besteht die Komponente A aus Polyethylen, insbesondere einem PE-LD oder einem PE-Copolymer, oder einem Polypropylen, insbesondere einem PP-Copolymer. Die Komponente B kann aus einem TPS, einem TPV oder einem TPU bestehen.

Vorzugsweise ist die Armierungsschicht aus gewickelten und / oder geflochtenen Fäden und / oder Filamenten gebildet. Die Armierungsschicht kann aus Polyester und/oder Polyamid bestehen, andere Materialien werden hierdurch jedoch nicht ausgeschlossen.

Gemäß einer zweckmäßigen Ausführungsform der Erfindung ist die Armierungsschicht von einer polymeren Schutzschicht umgeben, die vorzugsweise ebenfalls eine Mischung aus zwei polymeren Komponenten enthält. Die Komponente C kann ein thermoplastisches Polymer auf Olefin-Basis und die Komponente D ein thermoplastisches Elastomer oder ein Olefin-Block-Copolymer sein und die Komponenten C und D sowie das Mischungsverhältnis dieser Komponenten C und D ist vorzugsweise derart gewählt, dass die Härte Shore A der Schutzschicht höchstens 85 beträgt. Die Härte Shore A der Schutzschicht beträgt vorzugsweise mindestens 80. Die Komponente C kann aus Polyethylen, insbesondere einem PE-LD oder einem PE-Copolymer, oder einem Polypropylen, insbesondere einem PP-Copolymer, bestehen. Die Komponente D besteht zweckmäßigerweise aus einem TPS, einem TPV oder einem TPU.

Vorzugsweise ist der Tragschicht und/oder der Schutzschicht kein zusätzlicher Weichmacher zugesetzt. Die Tragschicht und/oder die Schutzschicht sind zweckmäßigerweise mittels eines Polymerverarbeitungsverfahrens, insbesondere mittels Extrusion hergestellt.

Die erfindungsgemäße Schlauchleitung kann, wie bereits erwähnt, beispielsweise als Transportleitung für unter hohem stehendem Wasser in Hochdruck-Reinigungsgeräten dienen. Die Einsatzmöglichkeiten sind jedoch hierauf nicht beschränkt. Alternativ ist es beispielsweise auch denkbar, die erfindungsgemäße Schlauchleitung zur Luftbefeuchtung oder aber auch in industriellen oder privaten Autowaschstraßen einzusetzen. Generell sind Anwendungen aller Art denkbar, bei denen insbesondere eine hohe Flexibilität und Knicksteifigkeit auch bei niedrigen Temperaturen von beispielsweise 10 °C und weniger von Bedeutung sind.

Im Folgenden wird die Erfindung anhand einer lediglich ein Ausführungsbeispiel darstellenden Zeichnung erläutert. Es zeigen schematisch:
- Fig. 1: eine Seitenansicht eines Ausschnittes einer erfindungsgemäßen Schlauchleitung und
- Fig. 2: einen Querschnitt durch die in Fig. 1 dargestellten Schlauchleitung.

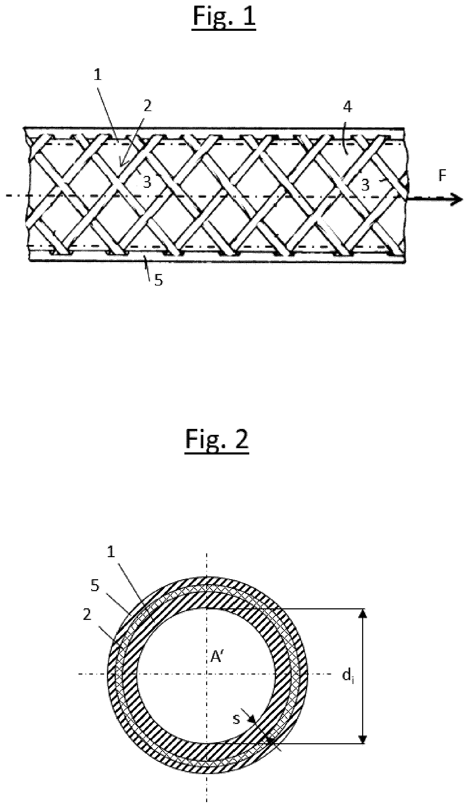

In den Fig. 1 und 2 ist eine Schlauchleitung dargestellt, welche Bestandteil eines Hochdruck-Reinigungsgerätes ist und zum Transport von Wasser F unter hohem Druck, insbesondere mehr als 50 bar Ü, bspw. mehr als 100 bar Ü dient. Die Schlauchleitung weist eine die innerste Schlauchschicht bildende Tragschicht 1 mit einer Mischung aus zwei polymeren Komponenten A und B auf. Ferner ist eine die Tragschicht 1 umgebende Armierungsschicht 2 vorgesehen, die aus geflochtenen Fäden 3 gebildet ist. Die Fäden 3 können - so wie in Fig. 1 dargestellt - eine offene Armierung bilden, so dass zwischen den Fäden 3 Freiräume 4 verbleiben. Insbesondere bei hohen Anwendungsdrücken kann es jedoch auch zweckmäßig bzw. erforderlich sein, eine geschlossene Armierung vorzusehen, die keine derartigen Freiräume aufweist. Die Tragschicht weist eine Dicke s von 1 bis 5 mm auf und der den freien Strömungsquerschnitt A' definierende Innendruchmesser dᵢ der Tragschicht 1 beträgt 2 bis 5 mm.

Die Komponente A ist ein thermoplastisches Polymer auf Olefin-Basis und die Komponente B ist ein thermoplastisches Elastomer oder ein Olefin-Block-Copolymer. Die Komponenten A und B sowie das Mischungsverhältnis dieser Komponenten A und B ist derart gewählt, dass die Härte Shore A der Tragschicht 1 mehr als 85 beträgt, jedoch höchstens 90 beträgt.

Die Komponente A besteht aus Polyethylen (bspw. einem PE-LD) oder einem PE-Copolymer; alternativ aus einem Polypropylen, insbesondere einem PP-Copolymer. Die Komponente B hingegen besteht aus einem TPS, einem TPV oder einem TPU.

Anhand der Figuren ist ferner erkennbar, dass die Armierungsschicht 2 von einer polymeren Schutzschicht 5 umgeben ist, die ebenfalls eine Mischung aus zwei polymeren Komponenten C und D enthält. Die Komponente C ein wiederum thermoplastisches Polymer auf Olefin-Basis und die Komponente D wiederum ein thermoplastisches Elastomer oder ein Olefin-Block-Copolymer. Die Komponenten C und D sowie das Mischungsverhältnis dieser Komponenten C und D ist derart gewählt, dass die Härte Shore A der Schutzschicht 5 höchstens 85, jedoch mindestens 80 beträgt.

Die Komponente C besteht wiederum aus Polyethylen, insbesondere einem PE-LD oder einem PE-Copolymer, oder einem Polypropylen, insbesondere einem PP-Copolymer.
Die Komponente D besteht wiederum aus einem TPS, einem TPV oder einem TPU.

Die Tragschicht 1 und auch die Schutzschicht 5 weisen keinen zusätzlichen Weichmacher auf. Die Tragschicht 1 und auch die Schutzschicht 5 wurden jeweils mittels Extrusion hergestellt.

## Patentansprüche

1. Schlauchleitung, insbesondere für Hochdruck-Reinigungsgeräte, zum Transport eines Fluides (F) mit
- einer eine Mischung aus zwei polymeren Komponenten A und B enthaltenden Tragschicht (1), welche vorzugsweise die innerste Schlauchschicht bildet und
- einer die Tragschicht (1) umgebenden Armierungsschicht (2),
**dadurch gekennzeichnet, dass** die Komponente A ein thermoplastisches Polymer auf Olefin-Basis und die Komponente B ein thermoplastisches Elastomer oder ein Olefin-Block-Copolymer ist und die Komponenten A und B sowie das Mischungsverhältnis dieser Komponenten A und B derart gewählt ist, dass die Härte Shore A der Tragschicht (1) mehr als 85 beträgt.

2. Schlauchleitung nach Anspruch 1, **dadurch gekennzeichnet, dass** Härte Shore A der Tragschicht (1) höchstens 90 beträgt.

3. Schlauchleitung nach Anspruch 1 oder 2, **dadurch gekennzeichnet, dass** die Komponente A aus Polyethylen, insbesondere einem PE-LD oder einem PE-Copolymer, oder einem Polypropylen, insbesondere einem PP-Copolymer, besteht.

4. Schlauchleitung nach einem der Ansprüche 1 bis 3, **dadurch gekennzeichnet, dass** die Komponente B aus einem TPS, einem TPV oder einem TPU besteht.

5. Schlauchleitung nach einem der Ansprüche 1 bis 4, **dadurch gekennzeichnet, dass** die Armierungsschicht (2) aus gewickelten und / oder geflochtenen Fäden (3) und / oder Filamenten gebildet ist.

6. Schlauchleitung nach einem der Ansprüche 1 bis 5, **dadurch gekennzeichnet, dass** die Armierungsschicht (2) von einer polymeren Schutzschicht (5) umgeben ist, die vorzugsweise ebenfalls eine Mischung aus zwei polymeren Komponenten C und D enthält.

7. Schlauchleitung nach Anspruch 6, **dadurch gekennzeichnet, dass** die Komponente C ein thermoplastisches Polymer auf Olefin-Basis und die Komponente D ein thermoplastisches Elastomer oder ein Olefin-Block-Copolymer ist und die Komponenten C und D sowie das Mischungsverhältnis dieser Komponenten C und D vorzugsweise derart gewählt ist, dass die Härte Shore A der Schutzschicht (5) höchstens 85 beträgt.

8. Schlauchleitung nach Anspruch 7, **dadurch gekennzeichnet, dass** die Härte Shore A der Schutzschicht (5) mindestens 80 beträgt.

9. Schlauchleitung nach Anspruch 7 oder 8, **dadurch gekennzeichnet, dass** die Komponente C aus Polyethylen, insbesondere einem PE-LD oder einem PE-Copolymer, oder einem Polypropylen, insbesondere einem PP-Copolymer, besteht.

10. Schlauchleitung nach einem der Ansprüche 7 bis 9, **dadurch gekennzeichnet, dass** die Komponente D aus einem TPS, einem TPV oder einem TPU besteht.

11. Schlauchleitung nach einem der Ansprüche 1 bis 10, **dadurch gekennzeichnet, dass** der Tragschicht (1) und/oder der Schutzschicht (5) kein zusätzlicher Weichmacher zugesetzt ist.

12. Schlauchleitung nach einem der Ansprüche 1 bis 11, **dadurch gekennzeichnet, dass** die Tragschicht (1) und/oder die Schutzschicht (5) mittels eines Polymerverarbeitungsverfahrens, insbesondere mittels Extrusion hergestellt sind.
